# EUROPEAN PATENT SPECIFICATION

(11) **EP 1 548 211 B1**
(45) Date of publication and mention of the grant of the patent: **02.08.2006**
(21) Application number: 04023299.3
(22) Date of filing: 30.09.2004
(51) Int. Cl.: E04H 15/00, B60P 1/00

(54) **A removal apparatus**
Umzugssystem
Système de déménagement

(30) Priority: 15.10.2003 IT VR20030118
(43) Date of publication of application: 29.06.2005
(73) Proprietor: Bertolani, Paolo, 37060 Castel d'Azzano (Verona) (IT)
(72) Inventor: Bertolani, Paolo, 37060 Castel d'Azzano (Verona) (IT)
(74) Representative: Ponchiroli, Simone

(56) References cited:
- DE-A1- 3 633 505
- DE-U1- 20 213 307
- GB-A- 2 140 479
- PATENT ABSTRACTS OF JAPAN vol. 2000, no. 03, 30 March 2000 (2000-03-30) & JP 11 342785 A (KANTO GIKEN:KK), 14 December 1999 (1999-12-14)

## Description

The present invention relates to a removal apparatus of the type described in the preamble of claim 1. An apparatus of this kind is disclosed in JP 11342785.

The removal apparatuses used today consists of a transport vehicle inside which furniture and other items to be moved are transported, and a lift with a mobile platform that allows the furniture and other items to be transferred directly from the road, where the vehicle is parked, to the balcony or window of the apartment involved in the move, and vice versa.

However, this known technology has the significant disadvantage of being greatly affected by the weather.

In particular, in the event of precipitation, the move becomes quite problematic and in some cases impossible. It is essential that the furniture and other items (often packed in cardboard boxes) do not get wet, since they may be ruined.

A variant is described in patent DE 3633505, which describes a loading platform having a removable rigid upper cover. However, this solution only guarantees protection from the rain for small furniture or other items and only when they are on the lift.

In contrast, patent JP 11342785 describes a removal vehicle with canopies which can be pulled out of the side to cover the area next to the vehicle loading - unloading opening.

However, that solution is not suitable for use with lifts, still less when the lift cannot be brought alongside the vehicle.

In this situation, the technical need which forms the basis of the present invention is to provide a removal apparatus which is easy to use even in the event of precipitation, and which guarantees protection from the weather both for the items moved, irrespective of their size, and the removal operators.

The technical need of the present invention is also to provide a removal apparatus which guarantees this result especially at the lift platform loading/unloading area.

In particular, the technical need of the present invention is to provide a removal apparatus which guarantees this result substantially irrespective of the reciprocal position of the vehicle and the lift.

The technical need specified and the aims indicated are substantially achieved by a removal apparatus as described in the claims herein.

Further features and the advantages of the present invention, are more clearly illustrated in the detailed description which follows, with reference to the accompanying drawings, which illustrate several preferred examplary embodiments of a removal apparatus, without limiting the scope of the inventive concept, in which:
- Figure 1 is a schematic axonometric view of a removal apparatus according to the prior art;
- Figure 2 is a schematic axonometric view with some parts transparent, of a removal apparatus made according to the present invention, in a first operating situation;
- Figure 3 is a schematic axonometric view with some parts transparent and other duplicated, of a removal apparatus made according to the present invention, in a second operating situation;
- Figure 4 is a schematic axonometric view of a removal apparatus made according to the present invention, in a third operating situation;
- Figure 5 is a schematic axonometric view with some parts transparent, of a removal apparatus made according to the present invention, in another operating situation;
- Figure 6 is a schematic axonometric view with some parts transparent, of a removal apparatus made according to the present invention, in another operating situation;
- Figure 7 is a schematic axonometric view with some parts transparent, of a removal apparatus made according to the present invention, in another operating situation;
- Figure 8 is a schematic side view with some parts transparent and others cut away, of part of a removal apparatus made according to the present invention;
- Figures 9 to 12 are schematic side views with some parts transparent and others cut away, of the apparatus illustrated in Figure 8 during a sequence of assembly steps;
- Figure 13 is a schematic rear view of several details of a removal apparatus made according to the present invention;
- Figure 14 is a view of the apparatus illustrated in Figure 13 in the operating condition;
- Figure 15 is a schematic side view of a detail of the removal apparatus made according to the present invention;
- Figure 16 is a view of the detail illustrated in Figure 15 in the operating condition;
- Figure 17 is a rear view of the detail illustrated in Figure 15;
- Figure 18 is a view of an alternative embodiment of the detail illustrated in Figure 16;
- Figure 19 is a rear view of the detail illustrated in Figure 16;
- Figure 20 is a rear view of an alternative embodiment of the detail illustrated in Figure 19;
- Figures 21 and 22 are views of the detail illustrated in Figure 20 in different operating conditions;
- Figure 23 is a view of another alternative embodiment of the detail illustrated in Figure 16;
- Figures 24 and 25 illustrate two alternative embodiments of a platform which is part of the apparatus according to the present invention;
- Figure 26 is an axonometric view with some parts transparent of a platform which is part of the apparatus according to the present invention;
- Figure 27 is a schematic axonometric view, with some parts transparent, of another detail of the apparatus according to the present invention;
- Figure 28 is a side view of another part of the apparatus according to the present invention, in two operating conditions;
- Figure 29 is an axonometric top view of an alternative embodiment of a part of the apparatus illustrated in Figure 14;
- Figure 30 is an axonometric top view of an alternative embodiment of a part of the apparatus illustrated in Figure 12;
- Figure 31 is a schematic front axonometric view, with some parts cut away, of the structure illustrated in Figure 30 in a different operating condition;
- Figure 32 is a schematic front axonometric view, with some parts cut away, of the structure illustrated in Figure 31 in a different operating condition;
- Figure 33 is a schematic front axonometric view, with some parts cut away, of the structure illustrated in Figure 31 in a different operating condition;
- Figure 34 is a side view with some parts cut away of the structure illustrated in Figure 31;
- Figure 35 is a side view with some further parts visible of the structure illustrated in Figure 34 in a different operating condition;
- Figure 36 is a side view with further parts visible of the structure illustrated in Figure 34;
- Figure 37 is a side view of the structure illustrated in Figure 36 in the folded condition;
- Figure 38 is a schematic front axonometric view, with some parts cut away, of an alternative embodiment of the structure illustrated in Figure 31;
- Figure 39 is a schematic front axonometric view, with some parts cut away, of the structure illustrated in Figure 38 in a different operating condition;
- Figure 40 is a top view of a detail of the structure illustrated in Figures 38 and 39.

With reference to the accompanying drawings, the numeral 1 denotes as a whole a removal apparatus made according to the present invention.

In the most simple embodiment of the present invention, the apparatus 1 comprises a first covering structure 10 which can be fitted at a lower position of a platform 7 of a lift 5 to protect the platform 7 from the weather when it is in the lower position. This first covering structure 10 is therefore designed to protect both items and people during platform 7 loading and unloading at ground level.

Details of the composition of the first covering structure 10 are provided below, relative to the most complete embodiment of the present invention.

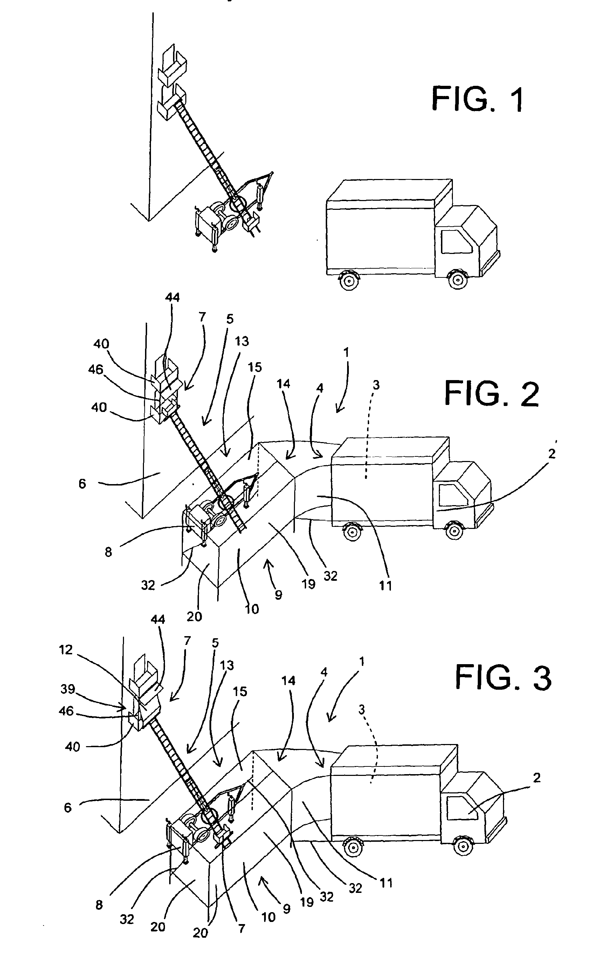

In the most complete embodiment, the apparatus 1 comprises firstly a vehicle 2, with at least a first compartment 3 for transporting the items to be moved. This first compartment 3 can be accessed from the outside through at least one loading - unloading opening 4, and a transportable lift 5, which can be assembled close to a building 6 and is equipped with a transport platform 7 mobile between a lower position in which it is close to the ground and an upper position in which it is at a predetermined storey of the building 6 (in Figure 3 the platform 7 is represented simultaneously in both positions). The accompanying drawings illustrate a lift 5 mounted on a driving carriage 8, of the conventional type.

The path along which the items to be moved are transferred, extending between the vehicle 2 and the platform 7 upper position, is fitted with special covering means 9 arranged in such a way as to cover the items to be moved along the entire path, protecting them from the weather.

Therefore, these covering means 9 comprise at least a first and a second covering structure 10, 11, and temporary protective means 12 which can be attached to the platform 7.

As already said, the first covering structure 10 can be assembled at the base of the lift 5 so that it is over the platform 7 when the platform is in the lower position, protecting it from the weather during loading - unloading operations.

In contrast, the second covering structure 11 can be assembled between the first covering structure 10 and the vehicle 2 loading - unloading opening 4, to create a covered path between the vehicle 2 and the platform 7 when the platform is in the lower position.

In contrast, the temporary protective means 12 are attached to the platform 7 and are designed to cover it during movements between the lower position and the upper position.

In all of the embodiments illustrated in the accompanying drawings, the first covering structure 10 has at least a first side 13 which is open to allow the passage of the platform 7, and at least a second side 14 which is open (or can be opened) communicating with the second covering structure 11, which allows the transfer of the items to be moved between the vehicle 2 and the platform 7 in the lower position and vice versa.

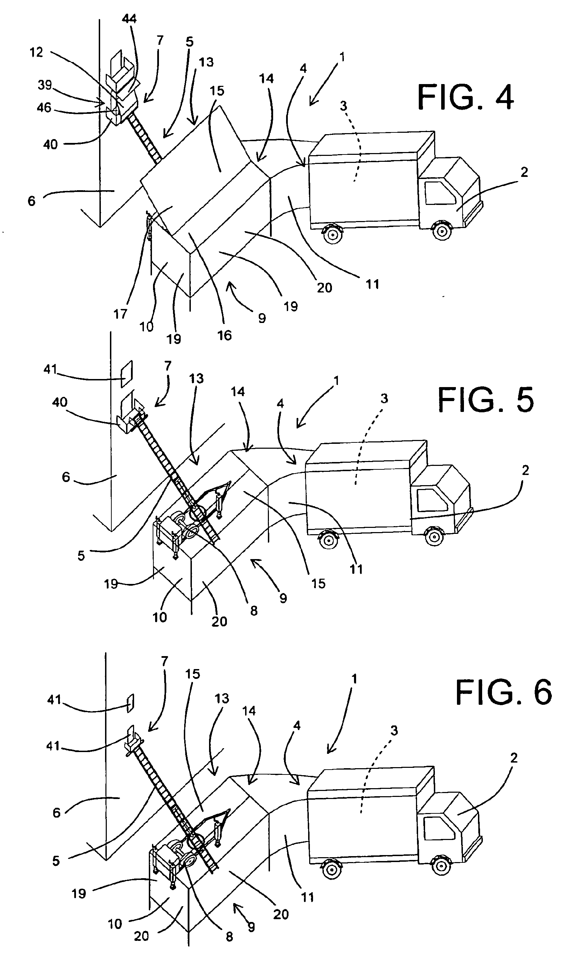

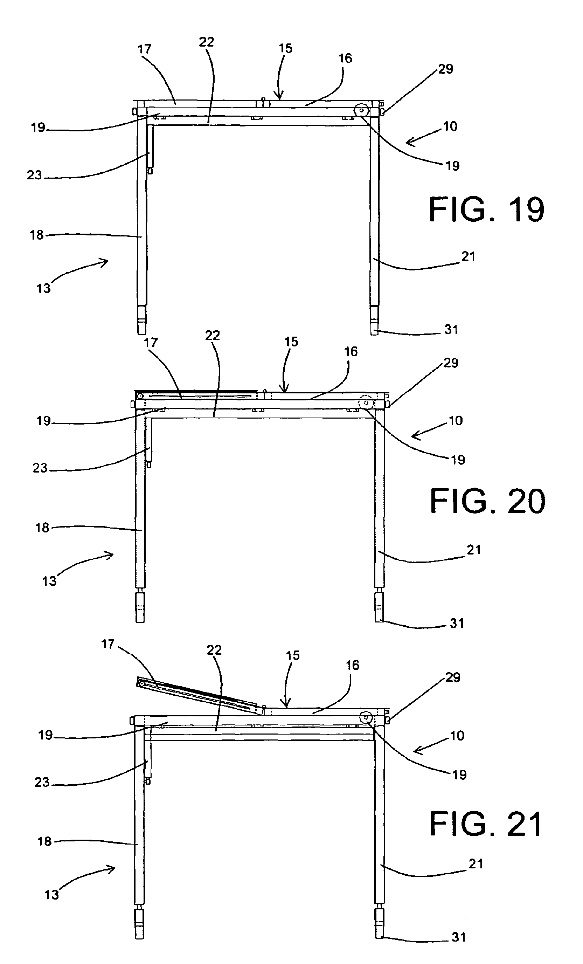

Advantageously, in the preferred embodiments, the first covering structure 10 has, at the first open side 13, a roof 15 which can be at least partly lifted or opened to facilitate the passage of the platform 7 (Figures 4, 19 - 22, 30 - 40).

In particular, in the embodiments illustrated in Figures 4 and 19 - 22, the roof 15 of the first covering structure 10 has a fixed part 16 and a mobile part 17 hinged to the fixed part 16 and which can be angled upwards relative to the fixed part 16.

Advantageously, the mobile part 17 may also be angled downwards relative to the fixed part 16.

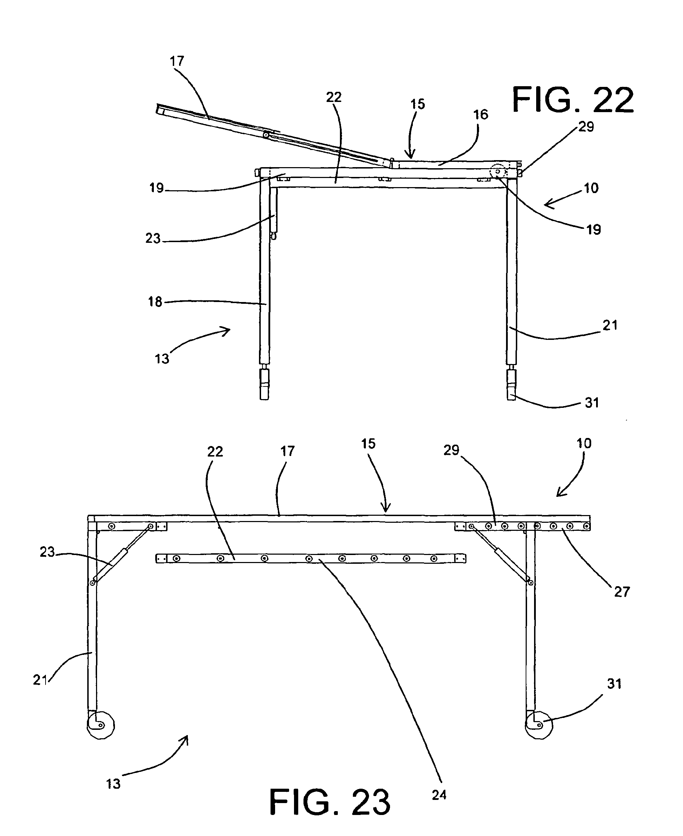

In the most complete embodiment the mobile part 17 of the roof 15 of the first covering structure 10, when in the angled position, can also be extended towards the outside of the first covering structure 10 (Figures 4 and 22). In the embodiment illustrated this is achieved with a mobile part 17 configuration that is at least partly telescopic.

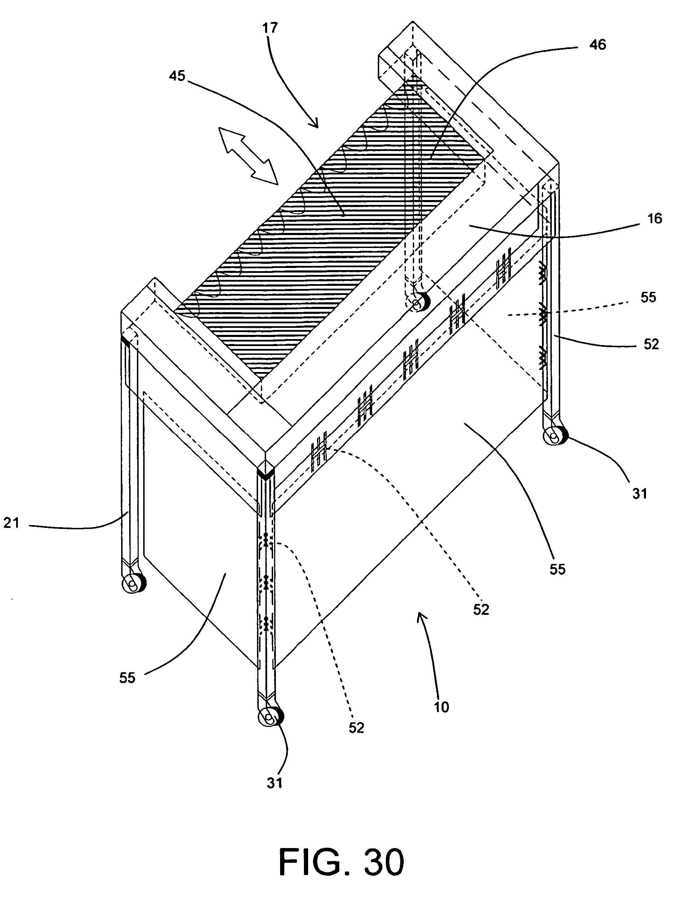

In contrast, in the embodiments illustrated in Figures 30 to 40, the first covering structure 10 has a roof 15 which, at least at the first open side 13, can in turn be partly opened to facilitate the passage of the platform 7.

In particular, the roof 15 of the first covering structure 10 has a fixed part 16 and a mobile part 17. As illustrated in the accompanying drawings, the fixed part 16 advantageously (but not necessarily) has a C-shaped plan, whilst the mobile part 17 extends between the two arms of the C.

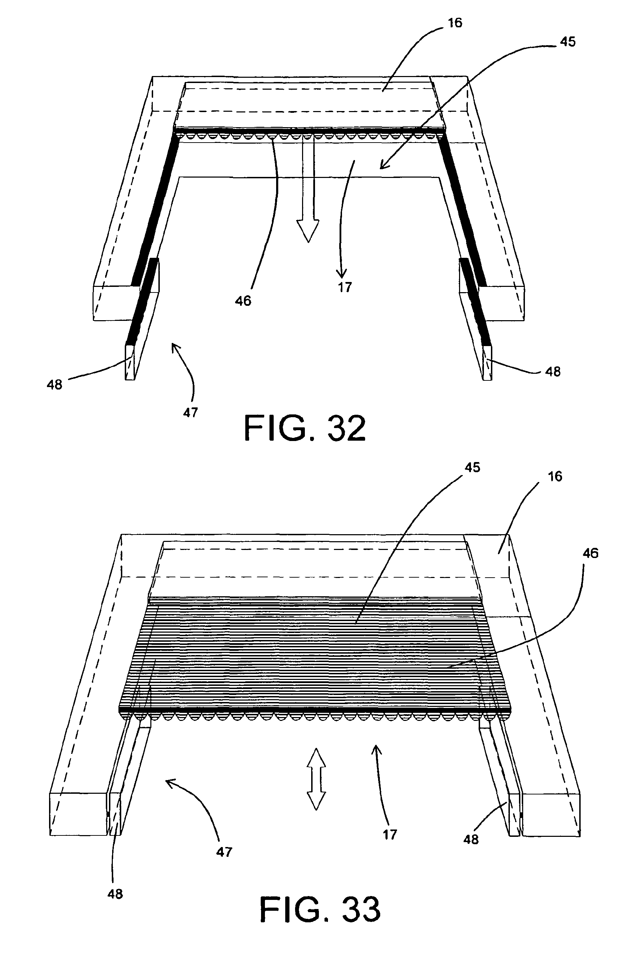

In the embodiment illustrated in Figures 30 to 37, the mobile part 17 is mobile between an active position in which it closes an opening 45 of the roof 15 (Figure 30) and a withdrawn position in which it leaves the opening 45 clear (Figure 32) .

In particular, the mobile part 17 advantageously consists of a roll-up device 46 (for example a sheet), designed to run, with its side edges, on the fixed part 16 (Figure 33).

Moreover, there may also be mobile supporting means 47 for the mobile part 17 which support the mobile part 17 in such a way that it projects outwards relative to the first covering structure 10. In the accompanying drawings the mobile means 47 consist of two pull-out attachments 48 mounted on the fixed part 16.

In addition, in the preferred embodiment of the first covering structure 10, the mobile part 17 (the sheet) is motor-driven.

There may also be control means (not illustrated) for the mobile part, operatively connected both to the mobile part 17 motor (also not illustrated) and to special sensors (not illustrated) connected to the lift 5 and/or to the first covering structure 10.

In particular, the control means can be programmed to control the movement of the mobile part 17 according to the position of the platform 7, in such a way as to move the mobile part 17 to the withdrawn position when the platform 7 passes as it moves up or down.

As regards the sensors, in addition to sensors which detect the position of the platform 7, there may be safety sensors designed to check that the dimensions of the items loaded on the platform 7 do not exceed the dimensions of the part of the roof 15 which can be opened, to prevent accidental impact against the fixed part 16.

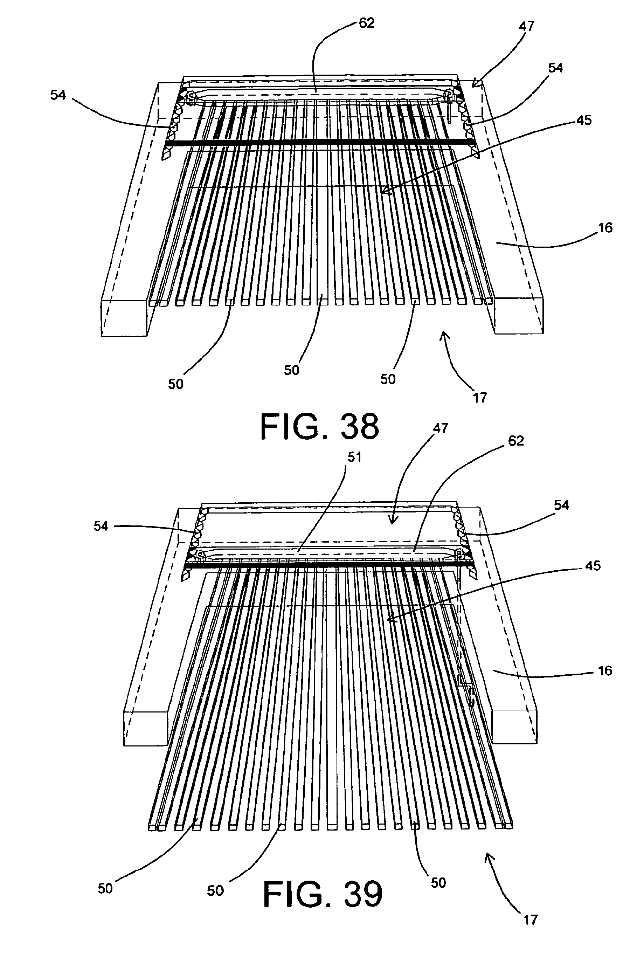

In contrast, in the embodiment illustrated in Figures 38 to 40, the mobile part 17 comprises one or more covering panels 49, adjacent to one another and advantageously partly overlapping, to guarantee a seal against rain.

As illustrated in Figure 40, each covering panel 49 is mounted on a bar 50 which is in turn hinged to a supporting beam 62 connected to the fixed part 16.

In this way, each covering panel 49 is hinged relative to the fixed part 16 according to a horizontal axis of rotation, and is mobile between a central position in which it forms part of the roof 15 (Figures 38 and 39 in which only the bars 50 are illustrated), and two limit positions rotated respectively upwards and downwards relative to the central position (not illustrated) in which they allow the platform 7 to pass.

Moreover, yielding supporting means 51 are attached to each covering panel 49 to hold it in the central position, in the absence of external stresses. In the embodiment illustrated, these yielding supporting means 51 are in particular mounted between each bar 50 and the supporting beam 62, and comprise one or more spring-loaded hinges 52 which can rotate through approximately 90° about the central position of equilibrium.

When the dimensions of the mobile part 17 (that is to say, the length of the individual covering panels 49) are relatively large, each covering panel 49 (as well as the relative bar 50) can be divided into a plurality of pieces 53, starting from the supporting beam 62, each hinged to the previous one in the same way as the covering panel 49 as a whole is hinged relative to the fixed part 16. Therefore, as illustrated in Figure 40, there is a spring-loaded hinge 52 between each piece 53.

Again in this embodiment, there may be mobile supporting means 47 for the mobile part 17 which support the mobile part 17 in such a way that it projects outwards relative to the first covering structure 10. In the accompanying drawings the mobile means 47 allow the supporting beam 62 to move along two side racks 54, parallel with the direction in which the bars 50 extend.

In this way, the supporting beam 62 is mobile between a first limit position (Figure 38) in which the covering panels 49 are partly inserted inside the fixed part 16, and a second limit position (Figure 39) in which the covering panels 49 are completely outside the fixed part 16. As a result, again in this case the covering panels 49 (as well as the bars 50) must be divided into at least two pieces 53 so that, even when the supporting beam 62 is in the first position, at least one joint point is outside the fixed part, and therefore able to operate.

In the embodiments illustrated in Figures 4 and 19 - 22, the first covering structure 10 consists of a rigid frame 18 to which roll-up sheets 19 are attached which, once spread out cover its sides. Each sheet 19 is mobile between a rolled up condition in which it is rolled over itself, and a spread out condition in which it covers at least part of a side wall 20 of the first covering structure 10.

In the accompanying drawings from 2 to 7, the frame 18 has the shape of a parallelepiped and has at least two roll-up sheets 19, designed to cover at least two side walls 20.

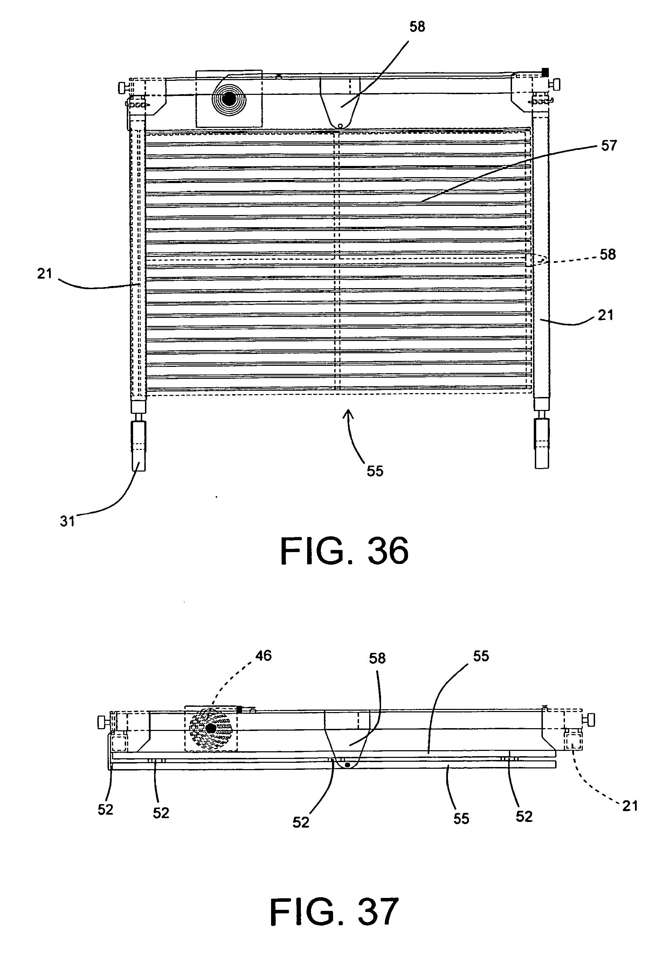

Alternatively, in the embodiment illustrated in Figures 30 to 40, the first covering structure 10 comprises a plurality of side protective panels 55. Each side protective panel 55 is mobile between a first position in which it forms a closed side surface of the first structure (Figure 30), and a second position in which it allows passage through said side surface (relatively visible in Figure 37 where the structure is folded).

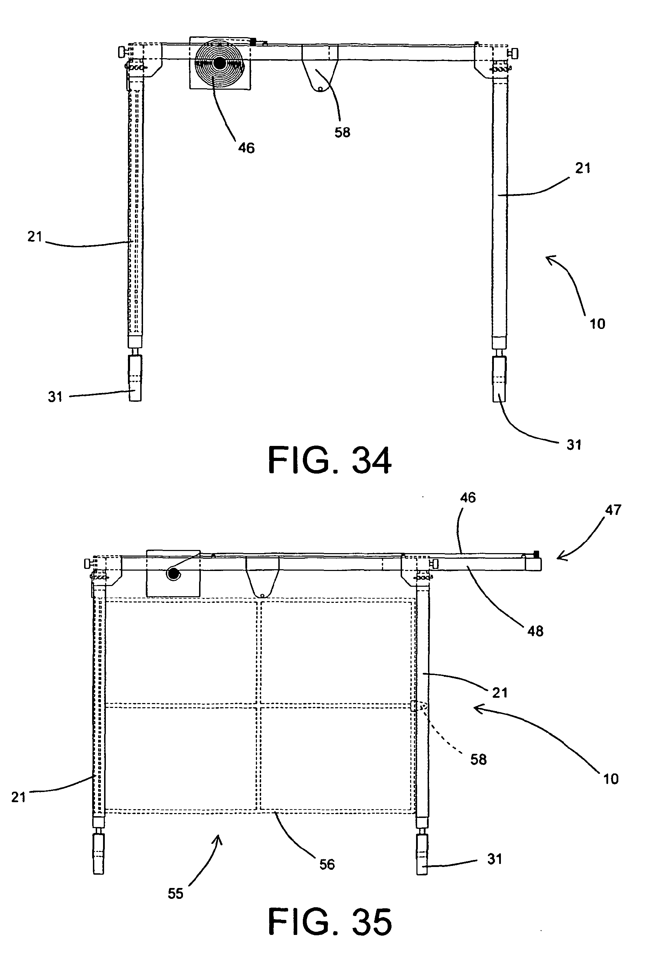

The side protective panel 55 illustrated in Figures 35 and 36 consists of a framework 56 (Figure 35) covered by a sheet 57 (Figure 36), in which holes (not illustrated) may be cut to prevent the side protective panel 55 from behaving like a sail in the wind.

In the embodiment illustrated in Figure 30, the two side protective panels 55 mounted on the short side of the first covering structure 10 may each be hinged to a leg (upright 21) of the first supporting structure 10, and to the side protective panel 55 mounted on the long side (case illustrated). Alternatively, the panels 55 may also be mounted in a removable fashion.

The side protective panel 55 mounted on the long side may, for example, be mounted in a removable fashion, and be hinged to the roof 15 of the first covering structure 10 (case illustrated).

In all of the cases the first covering structure 10 is also fitted with locking elements 58 designed to hold the side protective panels 55 in position.

Moreover, in other embodiments the side protective panels 55 consist of several parts connected in the appropriate way.

In the embodiments illustrated in the accompanying drawings, the frame 18 of the first covering structure 10 has a plurality of vertical uprights 21 and horizontal crosspieces 22 connected to the vertical uprights 21, even using special locking pistons 23. In the case of a first covering structure 10 with a liftable roof 15, at least the crosspiece 24 at the first open side 13 is partly removable to allow the passage of the platform 7 (Figure 23).

In contrast, in the case of the first covering structure illustrated in Figure 30, the horizontal crosspieces 22 are substituted by the fixed part 16 of the roof which forms a single C-shaped body.

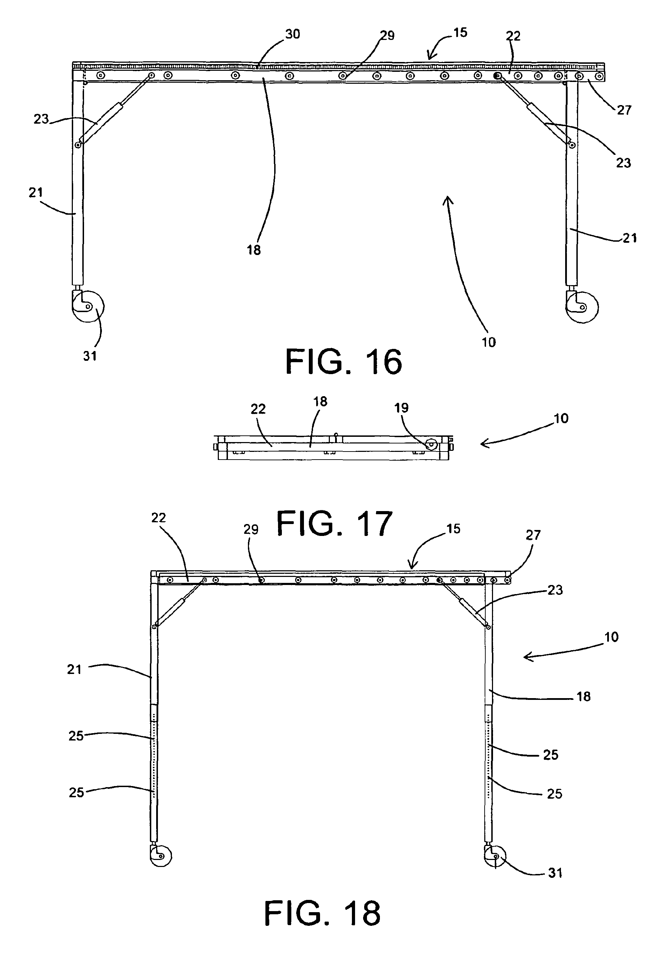

Figures 16 and 18 are schematic side views of two alternative embodiments of the first covering structure 10. In the embodiment in Figure 16 the uprights 21 have a fixed length, whilst in the embodiment in Figure 18 the uprights are height-adjustable, since they have a telescopic structure with a plurality of predetermined levels 25 (Figure 18). However, the height may be adjusted using any other method in addition to use of a telescopic structure.

In the case of adjustable uprights 21, advantageously the uprights 21 can be fixed at different heights to angle the roof 15.

In the preferred embodiment, the vehicle 2 also has at least a second compartment 26 in which the first covering structure 10 can be inserted when it is not used or when moving the apparatus 1. However, in some cases the first covering structure 10 may also be inserted directly in the first compartment 3, or may be transported using an auxiliary vehicle.

Advantageously, the second compartment 26 extends in the upper part of the vehicle 2 above the first compartment 3 (as illustrated in the accompanying drawings), or at the side of the first compartment 3 (solution not illustrated), or below the floor of the first compartment 3 (this solution also not illustrated) .

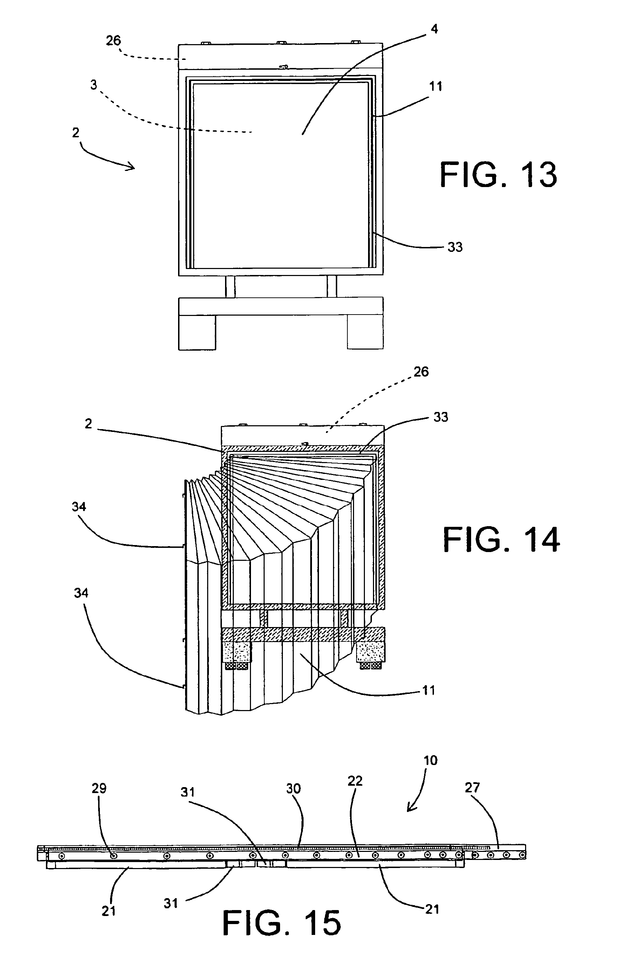

In the embodiments illustrated, to facilitate its insertion in the second compartment 26, the first covering structure 10 can be moved between an open operating condition in which it can cover the platform 7 and a non-operating condition in which it is folded on itself (Figures 15 and 17). Folding of the first covering structure 10 involves folding the vertical uprights 21 which form the supporting legs under the crosspieces 22 which form the roof 15. Moreover, the frame 18 of the first covering structure 10 has at least one projecting upper portion 27 which can be inserted in the second compartment 26 when the first structure is in the operating condition.

To facilitate the insertion and removal of the first covering structure 10 in the second compartment 26, the latter has at least one insertion guide 28, whilst the first covering structure 10 has guide elements 29 (consisting of idle wheels) which can be coupled to the insertion guide 28.

Moreover, the side crosspieces 22 of the first supporting structure may also be fitted with a rack 30 designed to engage with a special motor-driven gear wheel (not illustrated) which allows the first covering structure 10 to be inserted in and removed from the second compartment 26 in an automated fashion.

However, it should be noticed that there are also embodiments in which the frame 18 of the first covering structure 10 is rigid and can be directly drawn like a road trailer (by the vehicle 2 or by another vehicle).

Finally, in the embodiments illustrated, the first covering structure 10 is mounted on idle wheels 31 which allow it to be easily moved over the ground, but, to prevent accidental movements, it can also be made without wheels 31, or fitted with suitable supports (not illustrated) designed to lift the wheels 31 off the ground when the first covering structure 10 is assembled in the operating position.

To prevent unwanted movements of the first and second covering structure 11, the apparatus 1 also comprises one or more stiffening elements 32 to lock the position of the covering structures relative to the vehicle 2 and/or to the lift 5 (Figures 2 and 3).

As regards the second covering structure 11, in the preferred embodiment it has a bellows-style shape (Figure 14), so that it can connect the vehicle 2 and the first covering structure 10, adjusting to their reciprocal position.

Since the second covering structure 11 is assembled between the vehicle 2 and the first covering structure 10, it can only be attached to them and be raised off the ground.

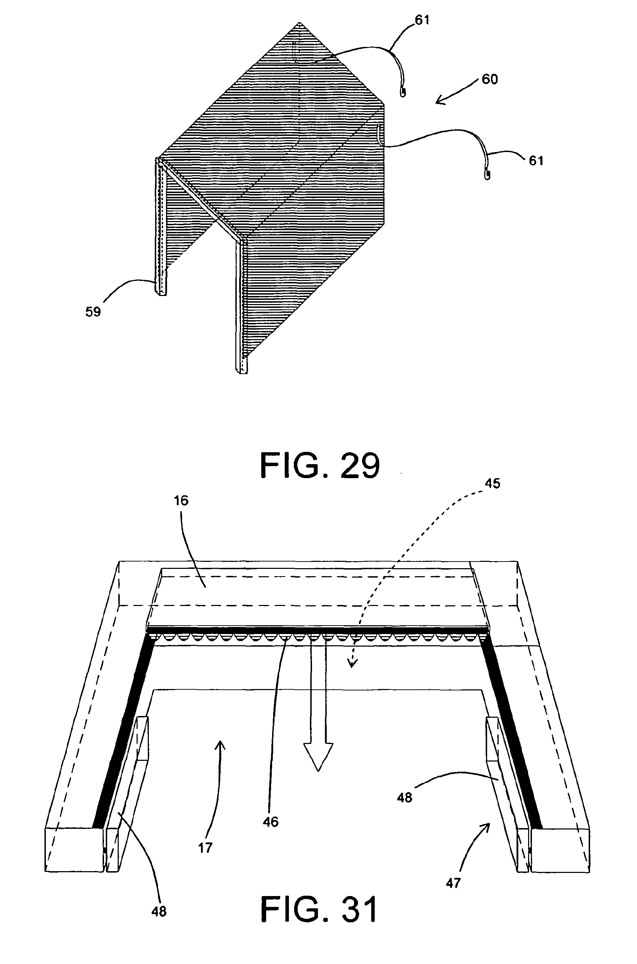

Alternatively, as illustrated in Figure 29, the second covering structure 11 may have a rigid end 59 which can rest on the ground and be connected to the first covering structure 10 and a mobile end 60 which can be fixed to the vehicle 2 using belts 61. In the preferred embodiment of the present invention, around the loading - unloading opening 4, the vehicle 2 has at least one seat 33 to which the second covering structure 11 is connected. Moreover, the second covering structure 11 is mobile between an operating condition in which it is at least partly outside the seat 33 and can be connected to the first covering structure 10 using special hooks 34 (Figure 14), and a travelling condition in which it is inserted in the seat 33 (Figure 13).

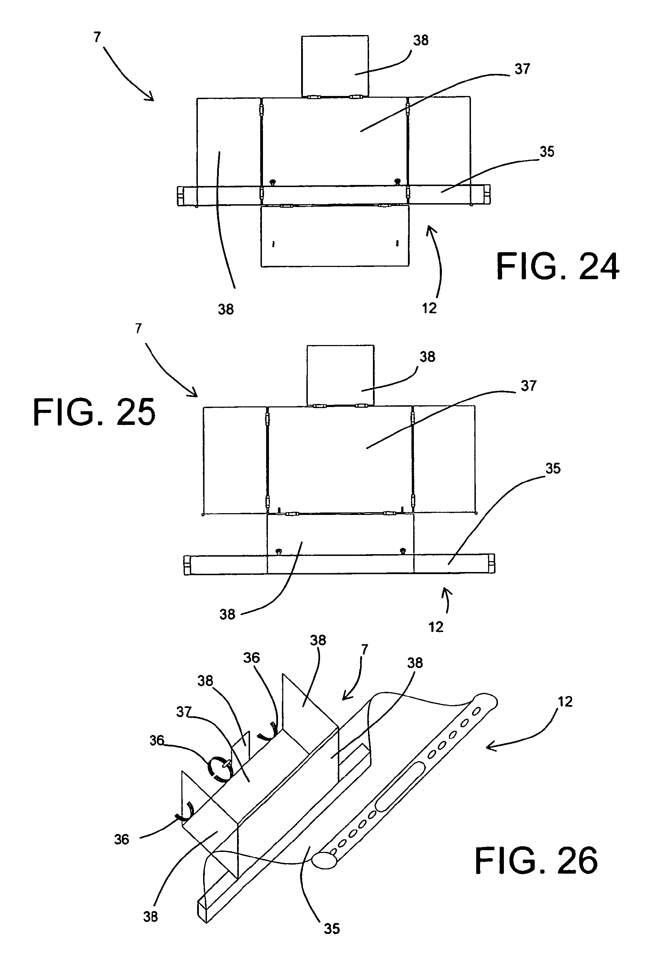

The temporary protective means 12 comprise at least one roll-up sheet 35 attached to the platform 7 and mobile between a home condition in which it is rolled up over itself (Figures 24 and 25) and a covering condition in which it covers the platform 7. The platform 7 is also fitted with couplings 36 (Figure 26) to hold the sheet 35 in the covering condition.

As illustrated in Figures 24, 25 and 26, the platform 7 comprises a loading surface 37 and a plurality of tilting side boards 38. The roll-up sheet 35 can be attached both to below the loading surface 37 (Figure 24) and to a side board 38 (Figure 25).

The removal apparatus 1 disclosed may be completed with further accessory parts.

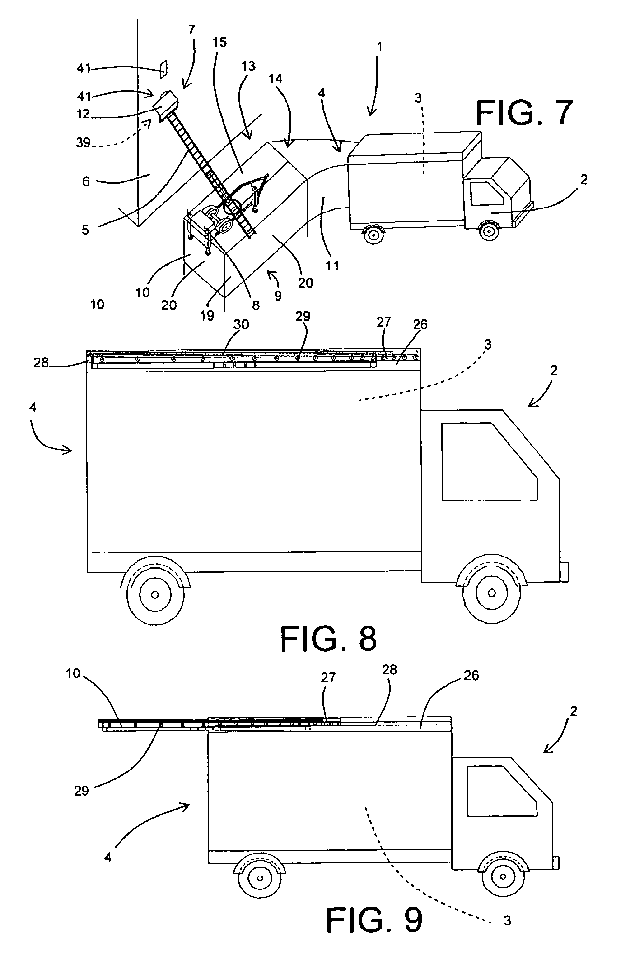

For example, there may be an auxiliary structure 39 which can be attached to the storey of the building 6 to which the lift 5 is connected (at the balcony 40 as illustrated in Figures 2 to 5, or to the window 41 as illustrated in Figures 6 and 7), with at least one coupling element 42 designed to hold the roll-up sheet 35 of the temporary protective means 12 in a loading - unloading condition in which it covers and protects the platform 7 but at the same time allows platform access.

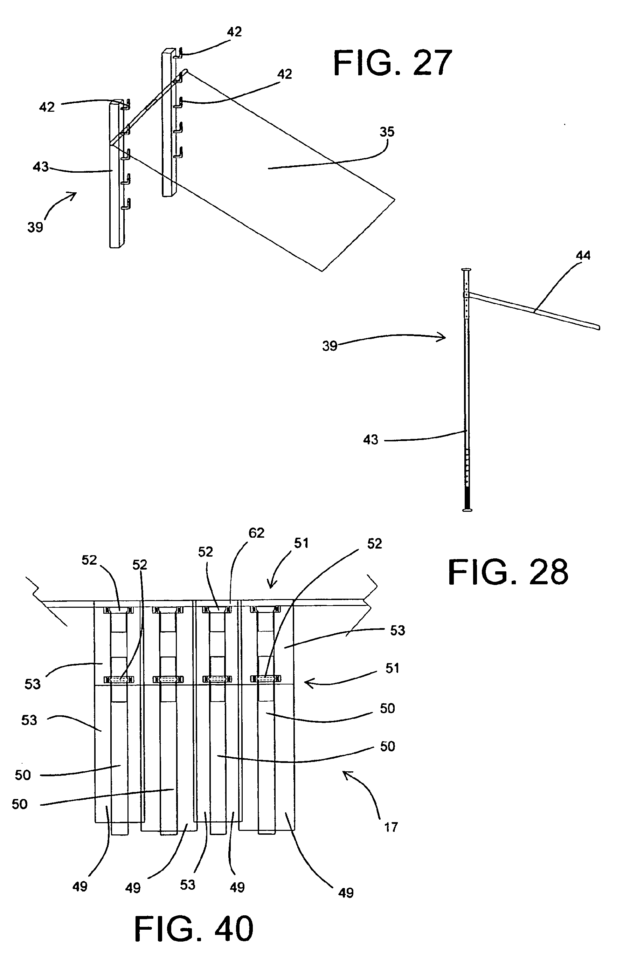

In the embodiment in Figure 27 the auxiliary structure 39 comprises two vertical columns 43 with a plurality of coupling elements 42 positioned at different heights. The auxiliary structure 39 can, therefore, be adapted to any operating situation.

In addition, the auxiliary structure 39 also comprises a canopy 44 mounted in such a way that it projects on the vertical columns 43.

Assembly of the apparatus 1 disclosed involves initially assembly of the lift 5 using the known methods, then positioning the vehicle 2 near the lift 5.

Then the first covering structure 10 is positioned (if necessary preceded by its assembly) at the base of the lift 5.

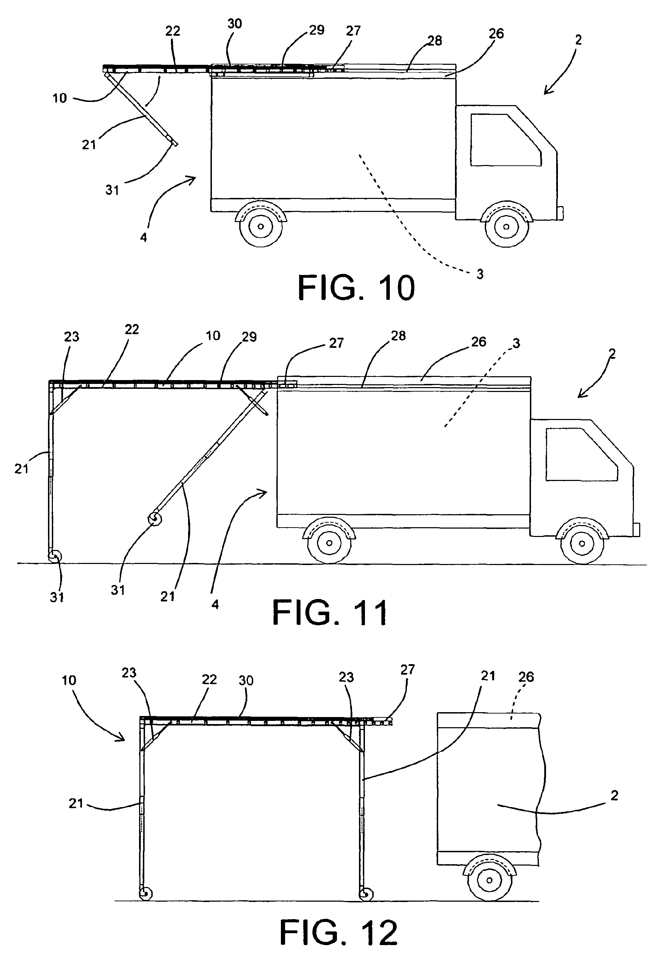

If required, before assembling the first covering structure 10, the first covering structure 10 is removed from the second compartment 26, manually or automatically (Figures 9 - 12). In particular, as soon as possible the vertical uprights 21 are lowered relative to the roof 15 and fixed to the crosspieces 22 using the locking pistons 23 (Figures 10 - 11). Finally, the projecting portion of the frame 18 is also taken out of the second compartment 26.

The first covering structure 10 is then positioned above the platform 7 when the platform is in the lower position, and the roof 15 is, if necessary, opened and extended (and the relative crosspiece 24 is removed). The opening 4 in the roof 15 is only necessary when the lift 5 is assembled with a gradient greater than a predetermined limit.

At this point the first covering structure 10 is locked to the vehicle 2 and/or the lift 5 by means of the stiffening elements.

In the most complete embodiment of the invention, the second covering structure 11 is then removed from its seat 33 and fixed to the first covering structure 10.

If necessary, the auxiliary structure 39 may also be assembled, which can be attached to the balcony 40, or, using special clamps not illustrated, to the window 41 jambs.

During the move, the furniture loaded on the platform 7 is covered by the temporary protective means 12 which, when the platform 7 is in the upper position, can be connected to the auxiliary structure 39 as illustrated in Figures 3, 4 and 7, so that its protection from the weather is guaranteed during unloading.

In the most simple embodiment of the present invention, both during transfer from the vehicle 2 to the first covering structure 10, and during the lift 5 upward movement, the furniture can be covered either with nylon and sheets, or with special parts fitted on either the vehicle 2 or the lift 5.

The covering panels 49 can move from the central position to the limit positions by means of manual or motor-driven mechanical operation, or, preferably, by impact of the platform 7 or the furniture loaded on them.

The present invention brings important advantages.

Firstly, the apparatus disclosed guarantees protection against the weather both for the items to be moved and the removal men/women, along the entire path from the vehicle to the apartment.

Secondly, on summer days, the apparatus can also be used to provide shade from the sun, for both the furniture or other delicate and valuable items, and for the removal workers, allowing them to operate in a more agreeable environment.

In addition the apparatus disclosed may be assembled even where space is limited and the vehicle cannot be positioned directly alongside the lift.

Moreover, the roll-up device 46 configuration of the temporary protective means in no way hinders access to the loading platform and allows them to be adjusted to any item transported, irrespective of its dimensions.

Even in the most simple embodiment, the first covering structure guarantees shelter from the weather at the platform loading zone, that is to say, where, due to the need to correctly position the furniture, it is not possible to keep it covered even with nylon or sheets.

It should also be noticed that the present invention is relatively easy to make and even the cost linked to implementation of the invention is not very high.

The invention described may be subject to many modifications and variations, without thereby departing from the scope of the appended claims.

All details may be substituted by other technically equivalent elements and all materials used, as well as the shapes and dimensions of the various components, may be any according to requirements.

## Claims

1. A removal apparatus comprising a vehicle (2) with at least a first compartment (3) for transporting items to be moved, and accessible from the outside at least through a loading - unloading opening (4), covering means (9) comprising at least a second covering structure associated to the vehicle (2) loading - unloading opening (4), the removal apparatus **characterised in that it** further comprises a transportable lift (5), which can be assembled close to a building (6), the lift having a transport platform (7) mobile between a lower position in which it is close to the ground and an upper position in which it is at a predetermined storey of the building (6), there also being a path for transferring the items to be moved extending between the vehicle (2) and the platform (7) upper position, said covering means being arrangeable in such a way that they cover the items to be moved along the entire path, protecting them from the weather, the covering means (9) further comprising:
- at least a first covering structure (10) which can be assembled at the platform (7) lower position to protect the platform (7) from the weather when it is in the lower position; and
- temporary protective means (12) which can be attached to the platform (7) to cover it during movements between the lower position and the upper position;
the second covering structure (11) being assemblable between the first covering structure (10) and the vehicle (2) loading - unloading opening (4) to create a covered path between the vehicle (2) and the platform (7) in its lowered position, and **in that** the first covering structure (10) has a roof (15) which can be at least partly lifted or opened to facilitate the passage of the platform (7).

2. The removal apparatus according to claim 1, **characterised in that** the first covering structure (10) has at least a first open side (13) to allow the passage of the platform (7), and at least a second open side (14) communicating with the second covering structure (11).

3. The removal apparatus according to claim 2, **characterised in that** the roof (15) can be at least partly lifted to facilitate the passage of the platform (7) at the first open side (13).

4. The removal apparatus according to claim 3, **characterised in that** the roof (15) of the first covering structure (10) has a fixed part (16) and a mobile part (17) hinged to the fixed part (16) which can be angled downwards and/or upwards relative to the fixed part (16).

5. The removal apparatus according to claim 4, **characterised in that** in the angled position the portion of the mobile part (17) which is angled upwards is also extendable.

6. The removal apparatus according to claim 5, **characterised in that** the mobile part (17) has a telescopic structure.

7. The removal apparatus according to claim 1, **characterised in that** the roof (15) of the first covering structure (10) has a fixed part (16) and a mobile part (17).

8. The removal apparatus according to claim 7, **characterised in that** the mobile part (17) is mobile between an active position in which it closes an opening (45) of the roof (15) and a withdrawn position in which it leaves the opening (45) clear.

9. The removal apparatus according to either of the claims 7 and 8, **characterised in that** the mobile part (17) consists of a roll-up device (46).

10. The removal apparatus according to any of the claims from 7 to 9, **characterised in that** the mobile part (17) is motor-driven.

11. The removal apparatus according to claim 10, **characterised in that** the movement of the mobile part (17) is controlled according to the position of the platform (7), so as to move the mobile part into the withdrawn position when the platform (7) passes.

12. The removal apparatus according to claim 7, **characterised in that** the mobile part (17) comprises one or more adjacent covering panels (49), each hinged relative to the fixed part (16) according to a horizontal axis of rotation, and mobile between a central position in which it forms part of the roof (15), and two limit positions rotated respectively upwards and downwards relative to the central position, in which it allows the passage of the platform (7).

13. The removal apparatus according to claim 12, **characterised in that** the mobile part also comprises yielding supporting means (51) attached to each of the covering panels (49) to hold them in the central position in the absence of external stresses.

14. The removal apparatus according to claim 13, **characterised in that** the yielding supporting means (51) comprise at least one spring-loaded hinge (52).

15. The removal apparatus according to claim 12, 13 or 14, **characterised in that** each covering panel (49) is divided into a plurality of pieces (53), each hinged to the previous one in the same way as the covering panel (49) as a whole is hinged relative to the fixed part.

16. The removal apparatus according to any of the claims from 7 to 15, **characterised in that** it comprises mobile supporting means (47) for the mobile part (17) which support the mobile part in such a way that it projects outwards relative to the first covering structure (10).

17. The removal apparatus according to any of the claims from 2 to 16, **characterised in that** the first covering structure (10) has a plurality of vertical uprights (21) and horizontal crosspieces (22) connected to the vertical uprights (21), at least one of the crosspieces (22), (24), positioned at the first open side (13), being at least partly removable to facilitate the passage of the platform (7).

18. The removal apparatus according to any of the previous claims, **characterised in that** the first covering structure (10) also comprises a plurality of roll-up sheets (19) for covering its sides.

19. The removal apparatus according to claim 18, **characterised in that** each of the sheets (19) is mobile between a rolled up condition in which it is rolled up over itself and a spread out condition in which it forms a closed side surface of the first covering structure (10).

20. The removal apparatus according to any of the claims from 1 to 17, **characterised in that** the first covering structure (10) also comprises a plurality of side protective panels (55).

21. The removal apparatus according to claim 20, **characterised in that** each of the side protective panels (55) is mobile between a first position in which it forms a closed side surface of the first structure (10) and a second position in which it allows passage through the side surface.

22. The removal apparatus according to any of the previous claims, **characterised in that** the vehicle (2) also has at least a second compartment (26) and **characterised in that** the first covering structure (10) can be inserted in the second compartment (26).

23. The removal apparatus according to claim 22, **characterised in that** the first covering structure (10) can be moved between an operating condition in which it can cover the platform (7) and a non-operating condition in which it is folded over itself, and in which it can be inserted in the second compartment (26).

24. The removal apparatus according to claim 22 or 23, **characterised in that** the second compartment (26) extends in the upper part of the vehicle (2), in a side part of the vehicle (2) or in a lower part of the vehicle (2).

25. The removal apparatus according to claim 24, **characterised in that** the first covering structure (10) has at least one projecting upper portion (27) which can be inserted in the second compartment (26) when it is in the operating condition, it then being possible to bring the structure into the non-operating condition.

26. The removal apparatus according to claim 24 or 25, **characterised in that** the second compartment (26) has at least one insertion guide (28) for guiding the insertion and removal of the first covering structure (10), and also **characterised in that** the first covering structure (10) has guide elements (29) which can be coupled to the insertion guide (28).

27. The removal apparatus according to any of the previous claims, **characterised in that** the first covering structure (10) has a plurality of height-adjustable vertical supporting legs.

28. The removal apparatus according to any of the previous claims, **characterised in that** the first covering structure (10) is mounted on idle wheels (31).

29. The removal apparatus according to any of the previous claims, **characterised in that** it also comprises one or more stiffening elements (32) to lock the position of the covering structures relative to the vehicle (2) and/or relative to the lift (5).

30. The removal apparatus according to any of the previous claims, **characterised in that** the second covering structure (11) has a bellows shape.

31. The removal apparatus according to any of the claims from 1 to 29, **characterised in that** the second covering structure (11) has a rigid end (59) which can be connected to the first covering structure (10) and a mobile end (60) which can be fixed to the vehicle (2).

32. The removal apparatus according to any of the previous claims, **characterised in that** the vehicle (2) has at least one seat (33) created around the loading - unloading opening (4), the second covering structure (11) being connected to the seat (33) and being mobile between an operating condition in which it is at least partly outside the seat (33) and can be connected to the first covering structure (10), and a travelling condition in which it is inserted in the seat (33).

33. The removal apparatus according to any of the previous claims, **characterised in that** the temporary protective means (12) comprise at least one roll-up sheet (35) attachable to the platform (7) and movable between a home condition in which it is rolled up over itself and a covering condition in which it covers the platform (7), the platform (7) also being fitted with couplings (36) for holding the sheet (35) in the covering condition.

34. The removal apparatus according to any of the previous claims, **characterised in that** it also comprises an auxiliary structure (39) which can be attached to the storey of the building (6) to which the lift (5) is connected when in use, the auxiliary structure (39) comprising at least one coupling element (42) to hold the temporary protective means (12) in a loading - unloading condition in which they cover the platform (7), at the same time allowing access to it.

35. The removal apparatus according to claim 34, **characterised in that** the auxiliary structure (39) also comprises a canopy (44) to further protect the platform (7).

36. A first covering structure (10) for a removal apparatus to be assembled at the lower position of a lift (5) platform (7) of the removal apparatus to protect the platform (7) from the weather when it is in the lower position, **characterised in that** the first covering structure (10) is made in accordance with any of the previous claims.

## Patentansprüche

1. Umzugssystem, enthaltend ein Fahrzeug (2) mit wenigstens einem ersten Raum (3) zum Transportieren von beweglichen Gegenständen und zugänglich von aussen her durch wenigstens eine Lade-/Entladeöffnung (4), Abdeckmittel (9), enthaltend wenigstens eine zweite Abdeckstruktur, die der Lade-/Entlandeöffnung (4) des Fahrzeugs (2) zugeordnet ist, wobei das Umzugssystem **dadurch gekennzeichnet ist, dass** es ausserdem eine transportierbare Hebevorrichtung (5) enthält, welche dicht an einem Gebäude (6) aufgestellt werden kann, wobei die Hebevorrichtung eine Trägerplattform (7) hat, die beweglich ist zwischen einer unteren Position, in welcher sie sich dicht am Boden befindet, und einer oberen Position, in welcher sie sich in Höhe eines bestimmten Stockwerks des Gebäudes (6) befindet, wobei ebenfalls eine Bahn zum Transferieren der zu transportierenden Gegenstände festgelegt ist, die sich zwischen dem Fahrzeug (2) und der oberen Position der Plattform (7) erstreckt, wobei die genannten Abdeckmittel geeignet sind, auf solche Weise angeordnet zu werden, dass sie die zu transportierenden Gegenstände entlang der gesamten Bahn abdecken und sie vor Witterungseinflüssen schützen, und wobei die Abdeckmittel (9) ausserdem enthalten:
- wenigstens eine erste Abdeckstruktur (10), welche an der unteren Position der Plattform (7) aufgebaut werden kann, um die Plattform (7) vor Witterungseinflüssen zu schützen, wenn sie sich in der unteren Position befindet; und
- vorübergehende Schutzmittel (12), welche an der Plattform (7) angebracht werden können, um sie während ihrer Verschiebebewegungen zwischen der unteren Position und der oberen Position abzudecken;
wobei die zweite Abdeckstruktur (11) zwischen der ersten Abdeckstruktur (10) und der Lade-/Entladeöffnung (4) des Fahrzeugs (2) aufgebaut wird, um eine abgedeckte Bahn zwischen dem Fahrzeug (2) und der Plattform (7) in ihrer unteren Position herzustellen, und dadurch, dass die erste Abdeckstruktur (10) ein Dach (15) hat, welches leicht teilweise angehoben oder geöffnet werden kann, um das Durchlassen der Plattform (7) zu erleichtern.

2. Umzugssystem nach Patentanspruch 1, **dadurch gekennzeichnet, dass** die erste Abdeckstruktur (10) wenigstens eine erste offene Seite (13) aufweist, um das Durchlassen der Plattform (7) zu erlauben, und wenigstens eine zweite offene Seite (14), die mit der zweiten Abdeckstruktur (11) verbunden ist.

3. Umzugssystem nach Patentanspruch 2, **dadurch gekennzeichnet, dass** das Dach (15) wenigstens teilweise angehoben werden kann, um das Durchlassen der Plattform (7) an der ersten offenen Seite (13) zu erleichtern.

4. Umzugssystem nach Patentanspruch 3, **dadurch gekennzeichnet, dass** das Dach (15) der ersten Abdeckstruktur (10) einen feststehenden Teil (16) und einen beweglichen Teil (17) hat, letzterer angelenkt an den feststehenden Teil (16), und welcher im Verhältnis zu dem feststehenden Teil (16) nach unten und/oder nach oben gerichtet angewinkelt werden kann.

5. Umzugssystem nach Patentanspruch 4, **dadurch gekennzeichnet, dass** der genannte, nach oben angewinkelte bewegliche Teil (17), ausfahrbar ist.

6. Umzugssystem nach Patentanspruch 5, **dadurch gekennzeichnet, dass** der bewegliche Teil (17) eine teleskopische Struktur hat.

7. Umzugssystem nach Patentanspruch 1, **dadurch gekennzeichnet, dass** das Dach (15) der ersten Abdeckstruktur (10) einen feststehenden Teil (16) und einen beweglichen Teil (17) hat.

8. Umzugssystem nach Patentanspruch 7, **dadurch gekennzeichnet, dass** der bewegliche Teil (17) beweglich ist zwischen einer aktiven Position, in welcher er eine Öffnung 45 des Daches (15) verschliesst, und einer zurückgezogenen Position, in welcher er die Öffnung (45) frei lässt.

9. Umzugssystem nach jedem der Patentansprüche 7 und 8, **dadurch gekennzeichnet, dass** der bewegliche Teil 17 aus einer Aufrollvorrichtung (46) besteht.

10. Umzugssystem nach einem beliebigen der Patentansprüche von 7 bis 9, **dadurch gekennzeichnet, dass** der bewegliche Teil (17) motorgetrieben ist.

11. Umzugssystem nach Patentanspruch 10, **dadurch gekennzeichnet, dass** der Betrieb des beweglichen Teiles (17) je nach der Position der Plattform (7) gesteuert wird, so dass der bewegliche Teil in seine zurückgezogene Position geht, wenn die Plattform (7) durchläuft.

12. Umzugssystem nach Patentanspruch 7, **dadurch gekennzeichnet, dass** der bewegliche Teil (17) ein oder mehrere angrenzende Abdeckpaneele (49) enthält, jedes im Verhältnis zu dem feststehenden Teil (16) angelenkt nach eine horizontalen Drehachse und beweglich zwischen einer mittleren Position, in welcher es Teil des Daches (15) bildet, und zwei Grenzpositionen, im Verhältnis zu der mittleren Position jeweils nach oben und nach unten gedreht, in welchen der Durchlass der Plattform (7) erlaubt ist.

13. Umzugssystem nach Patentanspruch 12, **dadurch gekennzeichnet, dass** der bewegliche Teil ebenfalls nachgebende Stützmittel (51) enthält, die einem jeden der Abdeckpaneele (49) zugeordnet sind, um sie bei Fehlen von äusseren Belastungen in der mittleren Position zu halten.

14. Umzugssystem nach Patentanspruch 13, **dadurch gekennzeichnet, dass** die nachgebenden Stützmittel (51) wenigstens ein federgespanntes Scharnier (52) enthalten.

15. Umzugssystem nach Patentanspruch 12, 13 oder 14, **dadurch gekennzeichnet, dass** jedes Abdeckpaneel (49) in eine Anzahl von Abschnitten (53) unterteilt ist, jeder angelenkt an den vorhergehenden und auf dieselbe Weise, in welcher das Abdeckpaneel (49) insgesamt im Verhältnis zu dem feststehenden Teil angelenkt ist.

16. Umzugssystem nach einem beliebigen der Patentansprüche von 7 bis 15, **dadurch gekennzeichnet, dass** es bewegliche Trägermittel (47) für den beweglichen Teil (17) enthält, welche den beweglichen Teil auf solche Weise tragen, dass er im Verhältnis zu der ersten Abdeckstruktur (10) nach aussen hervorsteht.

17. Umzugssystem nach einem beliebigen der Patentansprüche von 2 bis 16, **dadurch gekennzeichnet, dass** die erste Abdeckstruktur (10) eine Anzahl von vertikalen Ständern (21) hat, sowie horizontale Querstreben (22), die an die vertikalen Ständer (21) angeschlossen sind, wobei wenigstens eine der Querstreben (22), (24), angeordnet an der ersten offenen Seite (13), wenigstens teilweise entfembar ist, um den Durchlass der Plattform (7) zu erleichtern.

18. Umzugssystem nach einem beliebigen der vorstehenden Patentansprüche, **dadurch gekennzeichnet, dass** die erste Abdeckstruktur (10) eine Anzahl von Aufrollplanen (19) enthält, um ihre Seiten abzudecken.

19. Umzugssystem nach Patentanspruch 18, **dadurch gekennzeichnet, dass** jede der Planen (19) beweglich ist zwischen einem aufgerollten Zustand, in welchem sie um sich selbst aufgerollt ist, und einem ausgebreiteten Zustand, in welchem sie eine geschlossene seitliche Oberfläche der ersten Abdeckstruktur (10) bildet.

20. Umzugssystem nach einem beliebigen der Patentansprüche von 1 bis 17, **dadurch gekennzeichnet, dass** die erste Abdeckstruktur (10) auch eine Anzahl von seitlichen Schutzpaneelen (55) enthält.

21. Umzugssystem nach Patentanspruch 20, **dadurch gekennzeichnet, dass** jedes der seitlichen Schutzpaneele (55) beweglich ist zwischen einer ersten Position, in welcher es eine geschlossene Seitenfläche der ersten Struktur (10) bildet, und einer zweiten Position, in welcher es den Durchlass durch die Seitenfläche erlaubt.

22. Umzugssystem nach einem beliebigen der vorstehenden Patentansprüche, **dadurch gekennzeichnet, dass** das Fahrzeug (2) ebenfalls wenigstens einen zweiten Raum (26) enthält, und **dadurch gekennzeichnet, dass** die erste Abdeckstruktur (10) in den zweiten Raum (26) eingesetzt werden kann.

23. Umzugssystem nach Patentanspruch 22, **dadurch gekennzeichnet, dass** die erste Abdeckstruktur (10) bewegt werden kann zwischen einem Betriebszustand, in welchem sie die Plattform (7) überdecken kann, und einem Ruhezustand, in welchem sie um sich selbst gefaltet ist, und in welchem sie in den zweiten Raum (26) eingesetzt werden kann.

24. Umzugssystem nach Patentanspruch 22, **dadurch gekennzeichnet, dass** der zweite Raum (26) sich in dem oberen Teil des Fahrzeugs (2), in einem seitlichen Teil des Fahrzeugs (2) oder in einem unteren Teil des Fahrzeugs (2) erstreckt.

25. Umzugssystem nach Patentanspruch 24, **dadurch gekennzeichnet, dass** die erste Abdeckstruktur (10) wenigstens einen hervorstehenden oberen Abschnitt (27) aufweist, welcher in den zweiten Raum (26) eingeschoben werden kann, wenn sie sich im Betriebszustand befindet, wonach es dann möglich ist, die Struktur in den Ruhezustand zu bringen.

26. Umzugssystem nach Patentanspruch 24 oder 25, **dadurch gekennzeichnet, dass** der zweite Raum (26) wenigstens eine Einschubführung (28) zum Führen des Einschiebens und Herausziehens der ersten Abdeckstruktur (10) hat, und auch **dadurch gekennzeichnet, dass** die erste Abdeckstruktur (10) Führungselemente (29) hat, welche mit der Einschubführung (28) verbunden werden können.

27. Umzugssystem nach einem beliebigen der vorstehenden Patentansprüche, **dadurch gekennzeichnet, dass** die erste Abdeckstruktur (10) eine Anzahl von in der Höhe verstellbaren vertikalen Stützbeinen aufweist.

28. Umzugssystem nach einem beliebigen der vorstehenden Patentansprüche, **dadurch gekennzeichnet, dass** die erste Abdeckstruktur (10) auf leerlaufenden Rädern (31) montiert ist.

29. Umzugssystem nach einem beliebigen der vorstehenden Patentansprüche, **dadurch gekennzeichnet, dass** es ebenfalls ein oder mehrere Versteifungselemente (32) enthält, um die Position der Abdeckstruktur im Verhältnis zu dem Fahrzeug (2) und/oder zu der Hebevorrichtung (5) festzustellen.

30. Umzugssystem nach einem beliebigen der vorstehenden Patentansprüche, **dadurch gekennzeichnet, dass** die zweite Abdeckstruktur (11) eine Balgform hat.

31. Umzugssystem nach einem beliebigen der Patentansprüche von 1 bis 29, **dadurch gekennzeichnet, dass** die zweite Abdeckstruktur (11) ein starres Ende (59) aufweist, welches an die erste Abdeckstruktur (10) angeschlossen werden kann, und ein bewegliches Ende (60), welches an dem Fahrzeug (2) befestigt werden kann.

32. Umzugssystem nach einem beliebigen der vorstehenden Patentansprüche, **dadurch gekennzeichnet, dass** das Fahrzeug (2) wenigstens einen Sitz (33) aufweist, hergestellt rund um die Lade-/Entladeöffnung (4), wobei die zweite Abdeckstruktur (11) an den Sitz (33) angeschlossen wird und beweglich ist zwischen einem Betriebszustand, in welchem sie sich wenigstens teilweise ausserhalb des Sitzes (33) befindet und an die erste Abdeckstruktur (10) angeschlossen werden kann, und einem Fahrzustand, in welchem sie in den Sitz (33) eingesetzt ist.

33. Umzugssystem nach einem beliebigen der vorstehenden Patentansprüche, **dadurch gekennzeichnet, dass** die vorübergehenden Schutzmittel (12) wenigstens eine Aufrollfolie (35) enthalten, anbringbar an der Plattform (7) und beweglich zwischen einem Ruhezustand, in welchem sie um sich selbst aufgerollt ist, und einem Abdeckzustand, in welchem sie die Plattform (7) abdeckt, wobei die Plattform (7) ebenfalls mit Befestigungsmitteln (36) zum Halten der Folie (35) in dem Abdeckzustand versehen ist.

34. Umzugssystem nach einem beliebigen der vorstehenden Patentansprüche, **dadurch gekennzeichnet, dass** es ebenfalls eine Hilfsstruktur (39) enthält, welche an dem Stockwerk des Gebäudes (6) angebracht werden kann, mit welchem die Hebevorrichtung (5) während des Betriebes verbunden ist, wobei die Hilfsstruktur (39) wenigstens ein Verbindungselement (42) enthält, um die vorübergehenden Schutzmittel (12) in einem Lade-/Entladezustand zu halten, in welchem sie die Plattform (7) abdecken, und gleichzeitig den Zugang zu dieser erlauben.

35. Umzugssystem nach Patentanspruch 34, **dadurch gekennzeichnet, dass** die Hilfsstruktur (39) ebenfalls eine Überdachung (44) zum weiteren Schutz der Plattform (7) enthält.

36. Eine erste Abdeckstruktur (10) für ein Umzugssystem, das in einer unteren Position an einer Hebevorrichtung (5) für die Plattform (7) montiert wird, um die Plattform (7) vor Witterungseinflüssen zu schützen, wenn sie sich in der unteren Position befindet, **dadurch gekennzeichnet, dass** die erste Abdeckstruktur (10) nach einem der vorstehenden Patentansprüche hergestellt ist.

## Revendications

1. Un système de déménagement comprenant un véhicule (2) avec au moins un premier compartiment (3) pour transporter des objets à déménager, et accessible de l'extérieur par au moins une ouverture de chargement - déchargement (4), des moyens de couverture (9), comprenant au moins une deuxième structure de couverture associée à l'ouverture de chargement - déchargement (4) du véhicule (2), ledit système de déménagement étant **caractérisé en ce qu'**il comprend également un élévateur transportable (5), pouvant être assemblé près d'un bâtiment (6), et équipé d'une plate-forme de transport (7) mobile entre une position inférieure proche du sol et une position supérieure au niveau d'un étage prédéterminé du bâtiment (6), et **en ce qu'**il présente un passage pour le transfert des objets à déménager entre le véhicule (2) et la position supérieure de la plate-forme (7), lesdits moyens de couverture (9) pouvant être placés de façon à couvrir l'intégralité du passage et protéger ainsi des intempéries les objets à déménager, lesdits moyens de couverture (9) comprenant en outre :
- au moins une première structure de couverture (10) pouvant être assemblée dans la position inférieure de la plate-forme (7) pour protéger la plate-forme (7) des intempéries quand elle est dans la position inférieure ; et
- des moyens de protection temporaires (12), qui peuvent être fixés à la plate-forme (7) pour la couvrir pendant les mouvements entre la position inférieure et la position supérieure ;
la deuxième structure de couverture (11) pouvant être assemblée entre la première structure de couverture (10) et l'ouverture de chargement - déchargement (4) du véhicule (2) pour créer un passage couvert entre le véhicule (2) et la plate-forme (7) dans sa position inférieure, et la première structure de couverture (10) ayant un toit (15) qui peut être soulevé ou ouvert au moins partiellement pour faciliter le passage de la plate-forme (7).

2. Le système de déménagement selon la revendication 1, **caractérisé en ce que** la première structure de couverture (10) a au moins un premier côté ouvert (13) pour permettre le passage de la plate-forme (7), et au moins un deuxième côté ouvert (14) communiquant avec la deuxième structure de couverture (11).

3. Le système de déménagement selon la revendication 2, **caractérisé en ce que** le toit (15) peut être au moins partiellement soulevé pour faciliter le passage de la plate-forme (7) au premier côté ouvert (13).

4. Le système de déménagement selon la revendication 3, **caractérisé en ce que** le toit (15) de la première structure de couverture (10) a une partie fixe (16) et une partie mobile (17) articulée sur la partie fixe (16) et pouvant être orientée vers le bas et/ou vers le haut par rapport à la partie fixe (16).

5. Le système de déménagement selon la revendication 4, **caractérisé en ce que** la partie mobile (17) est également extensible lorsqu'elle est orientée vers le haut.

6. Le système de déménagement selon la revendication 5, **caractérisé en ce que** la partie mobile (17) a une structure télescopique.

7. Le système de déménagement selon la revendication 1, **caractérisé en ce que** le toit (15) de la première structure de couverture (10) a une partie fixe (16) et une partie mobile (17).

8. Le système de déménagement selon la revendication 7, **caractérisé en ce que** la partie mobile (17) se déplace entre une position active où elle ferme une ouverture (45) du toit (15) et une position rentrée où elle laisse l'ouverture (45) libre.

9. Le système de déménagement selon l'une quelconque des revendications 7 ou 8, **caractérisé en ce que** la partie mobile (17) consiste en un dispositif à enroulement (46).

10. Le système de déménagement selon l'une quelconque des revendications de 7 à 9, **caractérisé en ce que** la partie mobile (17) reçoit le mouvement d'un moteur.

11. Le système de déménagement selon la revendication 10, **caractérisé en ce que** le mouvement de la partie mobile (17) est commandé en fonction de la position de la plate-forme (7), de façon à déplacer la partie mobile dans la position rentrée au passage de la plate-forme (7).

12. Système de déménagement selon la revendication 7, **caractérisé en ce que** la partie mobile (17) comprend un ou plusieurs panneaux de couverture adjacents (49), chacun étant articulé à la partie fixe (16) selon un axe de rotation horizontal, et se déplace entre une position centrale où elle fait partie du toit (15) et deux positions limites orientées respectivement vers le haut et vers le bas par rapport à la position centrale, dans laquelle elle permet le passage de la plate-forme (7).

13. Le système de déménagement selon la revendication 12, **caractérisé en ce que** la partie mobile comprend aussi des moyens de support élastiques (51) fixés à chacun des panneaux de couverture (49) pour les tenir dans la position centrale en l'absence de forces externes.

14. Le système de déménagement selon la revendication 13, **caractérisé en ce que** les moyens de support élastiques (51) comprennent au moins une charnière à ressort (52).

15. Le système de déménagement selon la revendication 12, 13 ou 14, **caractérisé en ce que** chaque panneau de couverture (49) est subdivisé en une pluralité de pièces (53), chacune étant articulée à la précédente de la même façon que le panneau de couverture (49) entier est articulé par rapport à la partie fixe.

16. Le système de déménagement selon l'une quelconque des revendications de 7 à 15, **caractérisé en ce qu'**il comprend des moyens de support mobiles (47) qui soutiennent la partie mobile (17) de manière à ce qu'elle soit en saillie à l'extérieur par rapport à la première structure de couverture (10).

17. Le système de déménagement selon l'une quelconque des revendications de 2 à 16, **caractérisé en ce que** la première structure de couverture (10) présente une pluralité de montants verticaux (21) et de traverses horizontales (22) connectées aux montants verticaux (21), avec au moins l'une des traverses (22), (24), positionnée du premier côté ouvert (13),au moins partiellement amovible pour faciliter le passage de la plate-forme (7).

18. Le système de déménagement selon l'une quelconque des revendications précédentes, **caractérisé en ce que** la première structure de couverture (10) comprend aussi une pluralité de feuilles à enroulement (19) pour couvrir ses côtés.

19. Le système de déménagement selon la revendication 18, **caractérisé en ce que** chacune des feuilles (19) est mobile entre une position enroulée où elle est enroulée sur elle-même et une position déroulée où elle forme une surface latérale fermée de la première structure de couverture (10).

20. Le système de déménagement selon l'une quelconque des revendications de 1 à 17, **caractérisé en ce que** la première structure de couverture (10) comprend aussi une pluralité de panneaux latéraux de protection (55).

21. Le système de déménagement selon la revendication 20, **caractérisé en ce que** chacune des panneaux latéraux de protection (55) est mobile entre une première position où il forme une surface latérale fermée de la première structure (10) et une deuxième position où il permet le passage à travers la surface latérale.

22. Le système de déménagement selon l'une quelconque des revendications précédentes, **caractérisé en ce que** le véhicule (2) est également doté d'un deuxième compartiment (26) et **en ce que** la première structure de couverture (10) peut être insérée dans le deuxième compartiment (26).

23. Le système de déménagement selon la revendication 22, **caractérisé en ce que** la première structure de couverture (10) peut être déplacée entre une position opérationnelle où elle peut couvrir la plate-forme (7) et une position non opérationnelle où elle est repliée sur elle-même et peut être insérée dans le deuxième compartiment (26).

24. Le système de déménagement selon la revendication 22 ou 23, **caractérisé en ce que** le deuxième compartiment (26) s'étend dans la partie supérieure du véhicule (2), dans une partie latérale du véhicule (2) ou dans une partie inférieure du véhicule (2).

25. Le système de déménagement selon la revendication 24, **caractérisé en ce que** la première structure de couverture (10) présente au moins une portion supérieure saillante (27) qui peut être insérée dans le deuxième compartiment (26) lorsqu'elle est en position opérationnelle, ladite structure pouvant ensuite être ramenée en position non opérationnelle.

26. Le système de déménagement selon la revendication 24 ou 25, **caractérisé en ce que** le deuxième compartiment (26) a au moins un guide d'insertion (28) pour guider l'introduction et le retrait de la première structure de couverture (10), et **en ce que** la première structure de couverture (10) a des éléments de guidage (29) qui peuvent être couplés au guide d'insertion (28).

27. Le système de déménagement selon l'une quelconque des revendications précédentes, **caractérisé en ce que** la première structure de couverture (10) a une pluralité de pieds de support verticaux réglables en hauteur.

28. Le système de déménagement selon l'une quelconque des revendications précédentes, **caractérisé en ce que** la première structure de couverture (10) est montée sur des roues libres (31).

29. Le système de déménagement selon l'une quelconque des revendications précédentes, **caractérisé en ce qu'**il comprend aussi un ou plusieurs éléments de renforcement (32) pour bloquer la position des structures de couverture par rapport au véhicule (2) et/ou à l'élévateur (5).

30. Le système de déménagement selon l'une quelconque des revendications précédentes, **caractérisé en ce que** la deuxième structure de couverture (11) est en forme de soufflet.

31. Le système de déménagement selon l'une quelconque des revendications 1 à 29, **caractérisé en ce que** la deuxième structure de couverture (11) a une extrémité rigide (59) qui peut être connectée à la première structure de couverture (10), et une extrémité mobile (60) qui peut être fixée au véhicule (2).

32. Le système de déménagement selon l'une quelconque des revendications précédentes, **caractérisé en ce que** le véhicule (2) a au moins un logement (33) autour de l'ouverture de chargement - déchargement (4), la deuxième structure de couverture (11) étant connectée au logement (33) et étant mobile entre une position opérationnelle où elle est au moins partiellement hors du logement (33) et peut être connectée à la première structure de couverture (10) et une position de voyage où elle est insérée dans le logement (33).

33. Le système de déménagement selon l'une quelconque des revendications précédentes, **caractérisé en ce que** les protections temporaires (12) comprennent au moins une feuille à enroulement (35) pouvant être fixée à la plate-forme (7) et être déplacée entre une position de repos où elle est enroulée sur elle-même et une position de couverture où elle couvre la plate-forme (7), la plate-forme (7) étant aussi dotée d'éléments de retenue (36) pour maintenir la feuille (35) dans la position de couverture.

34. Le système de déménagement selon l'une quelconque des revendications précédentes, **caractérisé en ce qu'**il comprend aussi une structure auxiliaire (39), qui peut être fixée à l'étage du bâtiment (6) auquel l'élévateur (5) est relié quand il est utilisé, la structure auxiliaire (39) comprenant au moins un élément de retenue (42) pour maintenir les protections temporaires (12) dans une condition de chargement - déchargement, dans laquelle elles couvrent la plate-forme (7) tout en permettant l'accès à cette dernière.

35. Le système de déménagement selon la revendication 34, **caractérisé en ce que** la structure auxiliaire (39) comprend aussi un auvent (44) pour protéger davantage la plate-forme (7).

36. Une première structure de couverture (10) pour un système de déménagement à assembler à la position inférieure de la plate-forme (7) d'un élévateur (5) du système de déménagement pour protéger ladite plate-forme (7) des intempéries quand elle est dans la position inférieure, **caractérisée en ce que** la première structure de couverture (10) est faite selon l'une quelconque des revendications précédentes.
